# EUROPEAN PATENT SPECIFICATION

(11) **EP 0 424 432 B1**
(45) Date of publication and mention of the grant of the patent: **19.11.1997**
(21) Application number: 89907854.7
(22) Date of filing: 29.06.1989
(51) Int. Cl.: G06F 12/08, G06F 12/02, G06F 15/16

(54) **MULTIPROCESSOR SYSTEM INCLUDING A HIERARCHICAL CACHE MEMORY SYSTEM**
MULTIPROZESSORSYSTEM MIT HIERARCHISCHER CACHESPEICHERANORDNUNG
SYSTEME MULTIPROCESSEUR POURVU D'UN SYSTEME D'ANTEMEMOIRE HIERARCHIQUE

(30) Priority: 04.07.1988 SE 8802495; 30.12.1988 SE 8804700
(43) Date of publication of application: 02.05.1991
(73) Proprietor: SUN MICROSYSTEMS INC., Mountain View, California 94043-1100 (US)
(72) Inventor: HAGERSTEN, Erik, S-126 57 Hägersten (SE); HARIDI, Seif, S-175 60 Järfälla (SE); WARREN, David, H., D., Farnborough,Hampshire GU14 7BU (GB)
(74) Representative: Harris, Ian Richard
(86) International application number: SE8900369
(87) International publication number: WO9000283

(56) References cited:
- EP-A- 0 153 109
- EP-A- 0 180 369
- GB-A- 2 178 205
- US-A- 4 719 568

## Description

### FIELD OF THE INVENTION

The present invention relates to a computer system with a scalable multiprocessor architecture with a distributed physical memory, which supports data with a shared address space. According to the invention, the physical location of a data item is independent of its address. Several copies of a data item can exist simultaneously in the system in different physical locations. The data must be handled so that each copy of the data item has the same value (data coherence). Deleting the last copy of a data item in the system should also be avoided.

### THE STATE OF THE ART

Shared address space is already a well-known concept. Existing architectures with shared address space are typically computers with shared physical memory, such as the Sequent and the Encore. Architectures with shared address space, however, need not be implemented in this manner. The present invention does not utilize a shared physical memory; rather, hardware organization is more like that in a message-passing machine.

Message-passing machines are typically many processors with large, separate memories that are joined by a communication network. Machines with shared physical memory typically have only a limited number of processors with small, separate memories or caches joined by a shared bus to a large, physically shared memory. Message-passing machines usually require that memory access and communication with other processors be viewed as completely separate functions. The software must therefore often simulate a form of shared address space by mapping references to remote objects into the appropriate messages. Machines with shared physical memory, on the other hand, usually support a shared address space directly, which thereby allows the software to achieve communication implicitly by means of memory access but requires some kind of locking mechanism in order to do so.

Message-passing machines are generally scalable for any number of processors; however, the shared buses and memories of machines with shared physical memories are bottlenecks limiting the number of processors that can be connected. Message-passing machines, however, burden the software to a much greater extent to distribute the execution efficiently, and, thus, hardware scalability is only useful to the extent that the software can keep communication to a minimum.

The computer system according to the present invention is similar to a message-passing machine to the extent that its memory is distributed and the machine is scalable to any number of processors. The computer system according to the invention is also like a machine with shared physical memory in that the data-coherence protocol supports a shared address space by connecting processors via buses. The novelty of this invention relative to both message-passing machines and machines with shared physical memories is that the location of a data item is completely decoupled from its address.

Additional information about this invention and related systems is published in the articles, "Data Diffusion Machine--A Scalable Shared Virtual Multiprocessor" by David H. D. Warren and Seif Haridi in the International Conference on Fifth Generation Computer Systems November 1988, ICOT, and "The Cache Coherence Protocol of the Data Diffusion Machine," by Erik Hagersten and Seif Haridi, in the Proceedings of the Parallel Architectures and Languages Europe Conference, PARLE, June 1989.

### SUMMARY OF THE INVENTION

By way of meeting the goals described above, the invention concerns a computer system with a scalable multiprocessor architecture, which has a distributed physical memory and a shared address space, including processors paired with memories linked by one or several buses in a hierarchy. A distinguishing characteristic of the invention is that to each processor-memory pair is connected a controller, containing a state memory (directory) with state information about each data item in the memory. The controller handles reads and writes of data items according to a protocol as a function of the state of the data items, in which the location of the data items is independent of their addresses.

Other distinguishing characteristics and novelties of the invention are stated in the following subclaims.

### BRIEF DESCRIPTION OF THE DRAWINGS

The invention will now be described with reference to the attached drawings, of which
figure 1 is a schematic illustration of the machine's organization;
figure 2 shows an arrangement for expanding the capacity of the buses;
figure 3 schematically shows the different buffers connected to a directory; and,
figure 4 illustrates the various read states of a data item.

### DETAILED DESCRIPTION OF PREFERRED EMBODIMENTS OF THE INVENTION

The design of the computer according to this invention is based on the following considerations. There is no distinguished home location where a data item must normally reside as far as the software is concerned. Ideally, the physical location of each datum should be completely transparent to the software, and its location should be controlled automatically by the hardware.

From a software point of view, all data are accessed uniformly via a global address space independent of physical location. The machine therefore presents a software view similar to conventional shared-memory multiprocessors (e.g., Sequent and Encore). Thus, it is a completely general-purpose machine capable of supporting a wide variety of languages and applications. However, it is believed to be particularly suitable for executing declarative languages where data are typically "write once" and thereafter "read only." The machine supports sparse arrays by placing no constraints on how data should be allocated within the address space.

From a hardware point of view, the machine consists of an arbitrary number of processor-memory pairs connected by a hierarchy of buses and controllers (directories). Two to four levels in the hierarchy are sufficient to support hundreds to many thousands of processors. Memory is mapped into physical memory in a totally flexible manner. The mapping is dynamic, allowing data to migrate where most needed.

There may be multiple copies of a particular data item, but they will all share the same address. There is no particular "home location" corresponding to an address. Instead, data are distributed automatically over the machine in such a way as to reduce data access times and minimize data traffic. The result is that most memory requests are satisfied by a processor's own memory. Requests requiring remote access will be satisfied in no more than (4*N-2) bus transactions, where N is the number of levels in the hierarchy, and will in general only cause a limited amount of traffic over a limited part of the machine.

### MACHINE ORGANIZATION

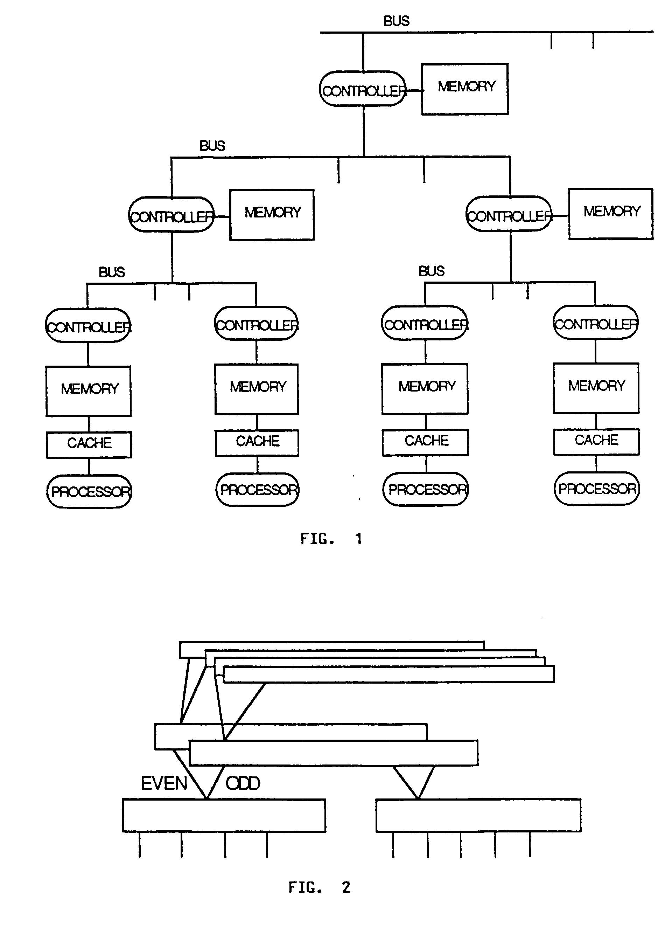

Figure 1 shows the machine's organization.

The machine is hierarchical. At the tips of the hierarchy are processors, each with a large local memory, possibly accessed via a conventional cache. The memory contains an image of some part of the global address space. The memory is set-associative and is organized like a (very large) cache, but it should be emphasized that this is the sole form of main memory in the machine. The memory is connected via a memory controller to a local bus. The local bus connects a cluster of similar configurations of processors, caches, memories, and controllers. The local bus may itself be connected via a controller to a higher bus, and so on, up the hierarchy. The higher level controllers each have access to a directory of state information, and are termed directory controllers. The directory is set-associative and has space for state bits for all the data items in the memories below.

The function of a directory is to mediate between the bus above it and the subsystem below it. Its function and behavior are a generalization of the "snooping" caches in single-bus shared-memory processors. It allows memory requests to be handled as locally as possible, but where a request cannot be handled locally, it is responsible for transmitting that request upward or downward to enable it to be satisfied. The directory contains a state memory telling it which part of the address space is mapped into the memory of the subsystem below it, and whether any of those addresses are also mapped into memory outside the subsystem. Thus, for any address, the controller can answer the questions "Is this datum in my subsystem?" and "Does this datum occur elsewhere in another subsystem?"

The behaviour of the directories is such that a memory request will not be transmitted outside a subsystem if (1) it is a read of a local datum or (2) it is a write to a nonshared datum. In particular, if a processor tries to read a datum or write a nonshared datum in its local memory, no external communication is required. Normally, this will cover the vast majority of memory requests.

If a subsystem tries to read a nonlocal datum, the read request will be propagated as far as is necessary to retrieve a copy of the datum, and the datum will be marked as shared where necessary. If a subsystem tries to write a shared datum, a request will be propagated to erase all other copies of the datum, and the datum will then be marked as nonshared.

The following points should be noted. The data that a processor creates itself will automatically reside in the processor's memory and will not be copied elsewhere unless required by another processor. A processor is likely to spend most of its time accessing such data. A processor is not obliged to repeatedly access a datum from a remote memory if the datum is initially remote. Instead, a remote datum tends to migrate to where it is being actively used, and is not tied to some fixed "home" location. In these respects, the present invention differs from conventional shared (physical) memory machines, e.g., Sequent, Encore, BBN Butterfly. These novel features greatly reduce both the contention for shared resources and average data-access times.

Although most memory accesses will tend to be local, the higher level buses may nevertheless become bottlenecks. An immediate solution, however, would be to make the higher level buses effectively as wide as necessary by duplicating higher level buses and directories to deal with different parts of the address space, splitting first on odd and even addresses, then on successively higher order bits of the addresses, as illustrated in figure 2.

### DATA ACCESS PROTOCOLS

A more detailed description of the data·access protocols follows, in which the following assumptions are made.

At the lowest level (level 1), the system consists of a number of processors. Each processor is connected by a controller to a memory and a bus. At higher levels (i >1) there is a directory for each subsystem. There is an arbiter on each bus to select one request. Each datum in a memory at level 1 is in one of the following states:

Exclusive (E) : This is the sole copy of the item.

Shared (S) : There may be other copies of the item.

Invalid (I) : The item is invalid (does not really exist).

Reading (R) : The item is requested for read.

Waiting (W). The item is waiting to become exclusive.

The states R and W are transient and do not appear in single-bus multiprocessors.

Each memory is N-way set associative, storing data items and their associated state bits. A directory is N-way set associative with a size equal to the total number of items in the memories below it. Directories only have space to store state bits.

Each datum in a directory is in one of the following states:

Exclusive (E) : No copies exist outside the subsystem.

Shared (S) : Copies may exist outside the subsystem.

Invalid (I) : The item is invalid (does not really exist in the subsystem).

Reading (R) : The item is requested for read.

Waiting (W): The item is waiting to become exclusive.

Answering (A) : The item will (eventually) respond to a read request.

Leaving (L) : The item is contained in the subsystem, but is about to leave it.

We assume the following data-replacement strategy and will discuss it in detail later. An invalid location is chosen first if there is one; otherwise, the shared datum that has been the least recently used is chosen for replacement. If there is no such datum, the least recently used exclusive item is chosen. In either of the latter two cases, a replacement algorithm is invoked.

As usual, whenever there is a read hit, the value of the data item is fetched and no specific action is invoked. Nor does the write hit of an exclusive data item lead to further action.

### BUS ORGANIZATION

A bus is connected downward to clients, which are either processors or subsystems. An arbitration function arbitrates between all clients and the directory above to select the next sender. The sender initiates the next transaction, which is one or several of the following bus phases:
init: initializing the transaction, transferring the transaction code and the address of the data item;
data: transferring the data part of the data item;
counter: transferring tne counter value of the transaction;
answer: all listening clients may answer "yes" (indicating whether none or at least one client answered "yes") ; and,
select: of the clients that answered yes, one is selected.

### BUS TRANSACTIONS

The bus may transfer the following transactions according to the invention. The sequence of the waiting bus phases is counted. A client that can execute a change of state in less phases, however, will interrupt the transaction beforehand. Typically, the answer and select phases can be eliminated.

r, read: (init, answer, select). Someone in the system wants to read a data item.

e, erase: (init). Throw away all copies of this data item.

d, data: (init, data). A (possibly) shared data item.

i, inject: (init, data, counter, answer, select). The only and last copy of a data item is trying to find a new place in a subsystem.

o, out: (init, data, answer). A data item is on its way out of the subsystem. It will terminate when it meets another copy of the same data item (or tracks from another copy).

x, exclusive: (init). Now there is only one copy of this data item in the system.

l, leave: (init, answer, select). This element will be leaving the subsystem.

u, up: (into, data). This data item will continue up until it meets a directory not in the L state.

### BUFFERS AND THEIR FUNCTION

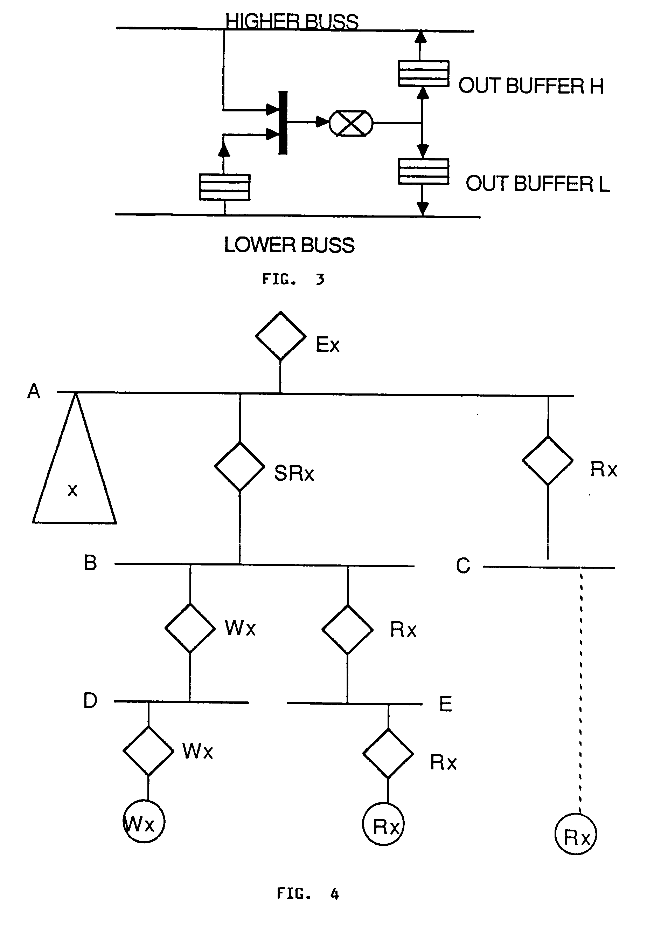

Figure 3 shows the organization of two buses and their buffers. Since a memory must be assigned buses before it can start a transaction, the memory must have an out buffer to the bus above it. A directory must give priority to one of the buses connected to it. Input transactions from the bus above it have the highest priority. The directory has an output buffer toward the bus above it and output and input buffers toward the bus below.

The output buffers store transactions that will be sent on the bus, and the input buffers store transactions that have been sent on the bus plus any values in the answer phase.

Some transactions on a bus can eliminate other transactions in the output buffers connected under it. The following transactions are able to eliminate:
- Erase eliminates all other transactions for the same data item.
- Out eliminates other out transactions for the same data item.

### PROTOCOL TABLES

The tables below summarize the protocols for the memory and directory controllers. The tables describe how a controller reacts to the various transactions depending on the state of the data item when the transaction is received. Each state has its own column, and each transaction has its own line. The action has the following format:

Guard-->NEW STATE: the-transaction-to-be-sent_{index,} where index. A refers to the bus above and index B to the bus below. An empty space means no action. The rest of the symbols are explained in connection with the tables.

### SYMBOLS AND EXPLANATIONS

Ø This situation is impossible.

⊥ The processor can continue with its process.

a := yes. The client answers yes.

a = 0 → No client answers yes.

a ≥ 1 → At least one client answers yes.

selected→ The client answers yes. No other client completed the transaction. The client is selected in the selection phase.

X:_{y+1} The counter increases before transaction y is

ctr > limit → The counter has passed its limit.

| MEMORY PROTOCOL FOR TRANSACTIONS BELOW | | | | | |
|---|---|---|---|---|---|
| | State | | | | |
| Transaction | I | E | S | R | W |
| read | R:r_{A}¹ | ⊥ | ⊥ | 0̸ | 0̸ |
| write | read; write | ⊥ | W:e_{A} | 0̸ | 0̸ |
| replace² | 0̸ | I:i_{A} | I:o_{A} | 0̸ | 0̸ |

| | | | | | |
|---|---|---|---|---|---|
| ¹ Preceded by a "replace" if there is no empty space in the corresponding set | | | | | |
| ² "Replace" first selects a data item to be replaced | | | | | |

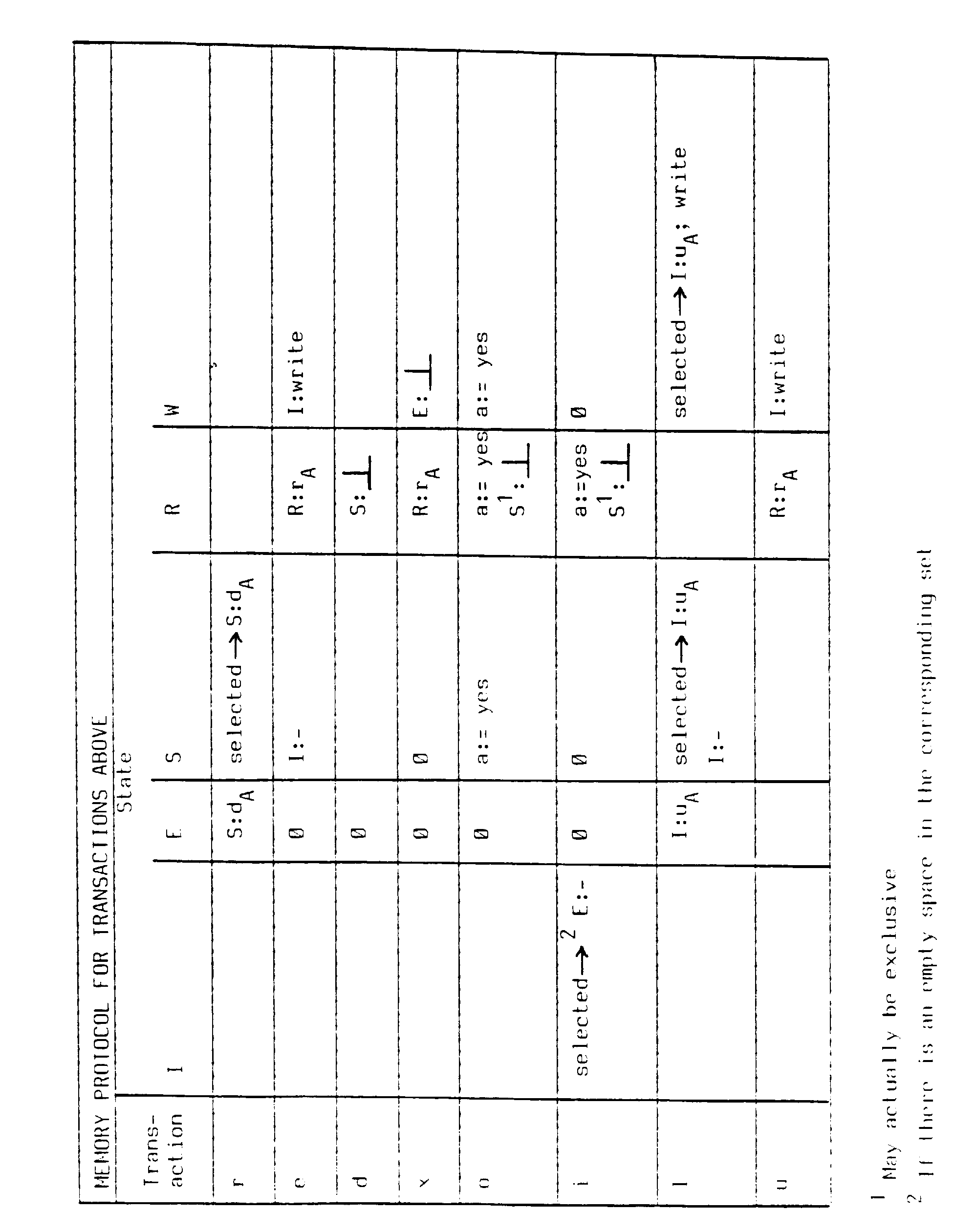

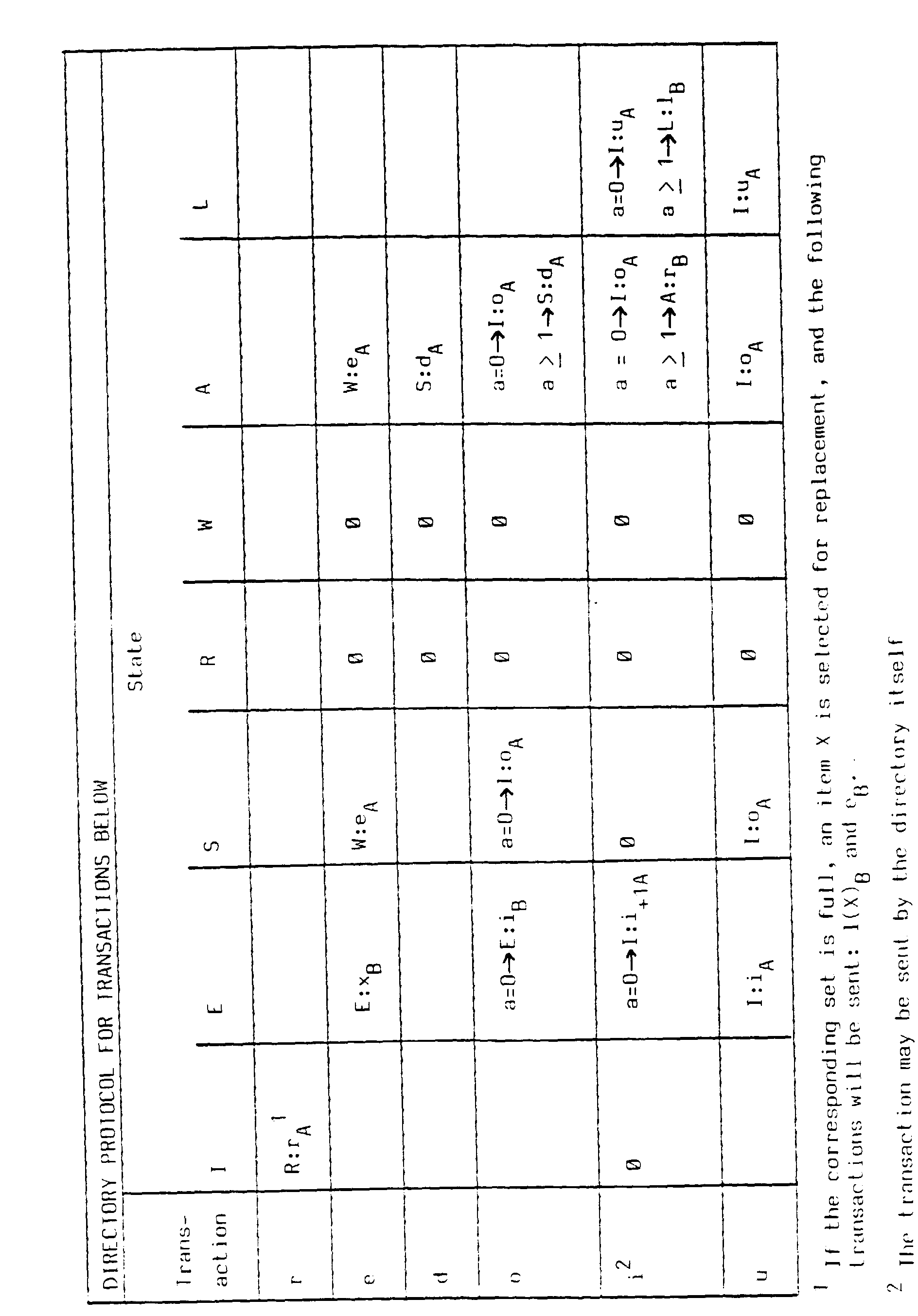

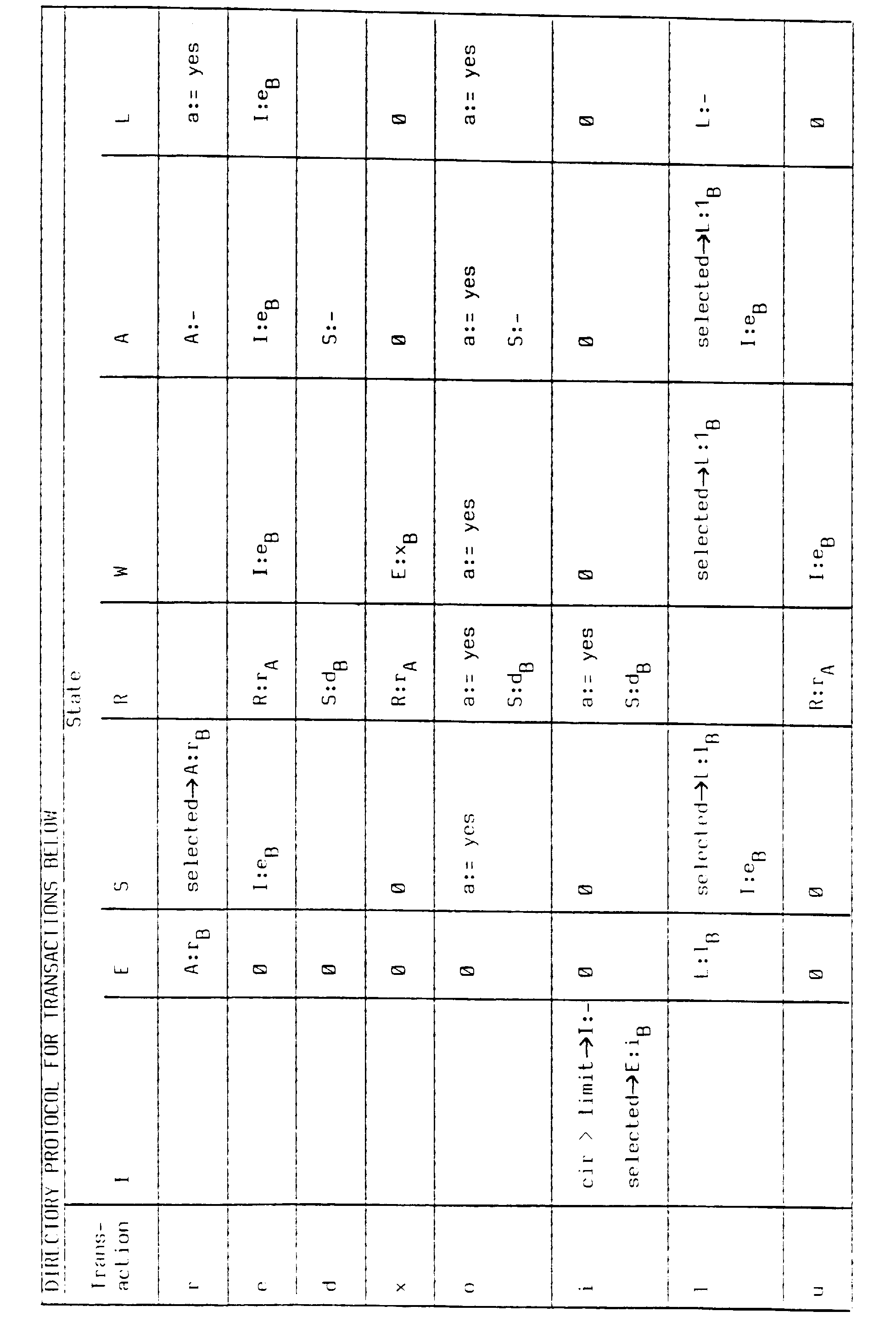

### SOME PROPERTIES OF THE ABOVE SCHEME

1. For a datum to become exclusive (to perform a write operationj, an erase message goes up to the directory where the item is exclusive. The directory acts as a lock, sending an erase acknowledgment downward. Thus, in the worst case, a datum in a four-level machine becomes exclusive after eight bus transactions, four erases upward and four erase acknowledgments downward.
2. It can be shown that no read request suspends forever. Moreover, the system described has a broadcast read effect when item messages are going down and a combining read effect when read requests are going up. The combining effect is thus similar to that provided by the IBM RP3 multiprocessor. For example, if one processor has a datum, and the remaining (64K-1) processors request the same datum simultaneously, all processors will get the datum in no more than 16 bus transactions.
3. The hot-spot phenomenon that occurs in many large-scale multiprocessors (such as the RP3) will not occur in the system according to the present invention.
4. It can be shown that the above protocol guarantees that all traffic is localized in the subsystem concerned with the transaction without disturbing other subsystems.

### EXAMPLE OF A COMPLICATED SITUATION

Figure 4 illustrates a typical complicated situation that might occur.

Two processors P1, P2 request a read (Rx), and two subsystems have the item x. One of them -- processor P1 -- requests exclusive access for a write operation (Wx). The controller between A and B (AB) decided to serve a read request issued by controller AC, and controller BE issues a read request on bus B. Two possibilities arise: (1) P1 will get its erase request acknowledged, or (2) the item in P1 will be erased because the other subsystem containing x opted for exclusive access. In the first case, the following events occur: controller AB changes state to W; the erase request (ex) appears on bus A, starting the erase operation for x in the top left subsystem; the erase acknowledge (xx) appears on bus A and will propagate downward, changing controllers in state W to state E; controller AC repeats its read request (rx), chasing the xx transaction and changing controllers AB and BD into A state; controller BD reissues rx; only one rx will appear on bus D (the combining effect) ; processor P1 performs its write; and, the read requests will then be served in broadcast mode. The second case is straightforward, as can be seen by examining the protocol. The net effect will be that the top-left subsystem will perform its write; the datum will be broadcast to P1 and the other processors requesting a read; and, finally, P1 will get exclusive access.

### REPLACEMENT STRATEGY

When a write miss or a read miss takes place, a new data item will eventually be read to memory. If the set in which the new data item is to be stored is full, an old data item is selected to leave memory, and its place is left for the new data item. This sequence of events is called replacement. There are two types of replacement transactions depending on the state of the old item: out and inject.

If the selected old item is in state S, the replacement is made with an cut transaction. An out transaction is more complicated than just throwing out the old data item, which was probably shared anyway. First, one must make sure taht the other copies of the data item are not thrown out as well. The memory in question initiates the replacement by sending an out transaction on the bus. Other memories on the bus with the present data item in any of the S, R, W, L, or A states answer yes, since their subsystems either have a copy of the item or have been promised a copy. If at least one memory answers yes, another copy of the item has been found, and the transaction is ended. If none answers yes, the directory will send an out transaction on the next higher bus and change the state of the data item to I, since no one in the subsystem seems to have a copy of the data item.

A data item in state S can actually either be shared or exclusive. The reason for this is simply that there were two copies in the system, but the second copy was replaced as described above. The situation is completely safe, even if some unecessary work may be done in the next write operation. A directory, however, may detect when the next-last copy is thrown out. This happens when an out transaction on the bus below gets exactly one yes answer, and the directory has the item in state E. The directory can then send a transaction (exclusive) on the bus to change the remaining data item's state to E. Whether this will save work is unclear, and the mechanism has not been described in the tables.

If the two last copies of a data item are replaced simultaneously and remain in the form of out transactions in separate buffers to be sent out on the same bus, the following occurs. The first out transaction on the bus will eliminate the out transaction remaining in the out buffer. It is now the last copy of the data item. A directory receiving an out transaction from below but no yes answers understands what has happened and converts the out transaction to an inject transaction (see below).

If the data item to be replaced is in state E, this will result in an inject transaction, or a refugee looking for a new home. If any memory has room for the refugee, it answers yes; if selected, it gives a new nome to the item in state E. If no memory has room for the refuges, the inject transaction is repeated on the next higher bus, where a directory may be willing to give it a change. A directory cannot promise anything, however, since an inject transaction can be denied further along and be forced to turn back. A counter accompanying the inject transaction counts how many attempts an inject transaction has made. When the counter passes a limiting value, the inject transaction is stopped and sent to a secondary memory. A memory that wishes to send a data item directly to secondary memory may do so with an inject transaction with its counter initiated at the limiting value.

A subsystem in state A has promised to answer a read request. Before the request has reached the memory in which the data item exists, it may already have been replaced, and an inject or out transaction may be on the way upward. This will work just fine, since these transactions carry the data value of the data item. Thus, the directory that promised to answer can do so by creating a data transaction to be sent on the bus above. If the transaction on the way up is of the inject type, however, caution should be exercised. If a client on the bus below has promised to give the inject transaction a chance (at least one answers yes), then the client believes it has the only copy of a data item. Then the directory has to send a new read transaction downward instead.

### REPLACEMENT INITIATED BY THE DIRECTORY

One can't be sure that a data item will find space in a directory simply because it finds space in a memory below. A directory with a data item in state I that receives a read transaction from below must change the state of the data item to R and repeat its read of the bus above. If the set intended for the data item's new state is full, an old data item must be selected and passed from tne subsystem to make space for the new one. This is accomplished by a leave transaction being sent downward in the system. On each bus, a client is selected to continue the leave transaction downward and change the item's state to L, whereas other clients containing the data item will send an erase downward and change its state to I. On the lowest level, a selected memory will respond with an up transaction, which will be propagated upward through all the directories in the L state. When up finally reaches the directory that initiated the replacement, it will either result in an inject or an out transaction.

The data item that started the replacement will need to repeat its read transaction when the replacement is completed. This is achieved by sending an erase transaction for this data item downward immediately after a replacement has been initiated by the first leave transaction. When this transaction finally reaches the memory that wants to read the data item, the memory will repeat the read transaction upward again. Hopefully, there will be space in the directory this time.

A hardware optimization of the above is a small memory in the directory that can store the data item to be replaced while the leave transaction is completed. This would immediately prepare a place for the read transaction, which could continue without delay. An erase for the read transaction would be sent down only if this memory were full. This memory could be made quite small but still have an influence on performance.

### LOCKING

Some operations, depending on the nature of the processor, need to be performed atomically. For example, if the processor provides a test-and-set instruction, a read-modify transaction will be performed by the memory controller. A read-modify behaves like a write except that, before the data item is written over, the original value of the item is fed back to the processor. With such an implementation of read-modify, together with the general behavior of the machine, it is possible to perform spin-locking locally without generating any traffic, as shown below:

### Lock(X) :

Start: Flag := Test&Set X; % where Flag is a register.
   If Flag = 0 then Exit;
Loop: If X=1 then goto Loop else goto Start; % local spinning until X is modified
Exit:
Unlock (X) :
X := 0;

This invention is capable, thus, of automatically moving, duplicating, and replacing data items while retaining data coherence and losing no data from the system. The invention is not limited to the special terminology in this description which is only an example illustrating the invention. The invention is limited solely by the claims listed below.

## Claims

1. A computer system with multiprocessor architecture, which has a distributed physical memory and a shared address space obtained by connecting the processors of the system by buses, including processor-memory pairs that store the data values as well as the state of the data items, characterized in that the system's only data memory is composed of the processors' item memories, which has associative properties, allowing for items to be duplicated and/or moved between the memories in a flexible way, and/or to be erased under control by a protocol in such a way that at least one copy of each item always remains in one item memory, the system having a hierarchical topology with processor-memory pairs as the leaves of the tree, and comprising directories at the hïerarchical tree's branching points that store state information about items in its subsystem to allow for the protocol to implement its functionality, the protocol moving copies of the items where needed, while maintaining the consistency of the memories.

2. A computer system according to claim 1, characterized in that the protocol regulates transactions for reading and writing, etc., the data items, in dependence of the state of the data items.

3. A computer system according to claim 1 or 2, characterized in that the memories, both the item memories and the state memories, are set associative.

4. A computer system according to any one of the preceding claims, characterized in that each data item can exist in one of the following states with the following given meanings:
Exclusive (E): this is the only copy of the item;
Shared (S): there may be other copies of the item;
Invalid (I): the item is invalid (does not really exist in the subsystem);
Reading (R): the item is requested for read;
Waiting (W): the item is waiting to become exclusive.

5. A computer system according to claim 4,
characterized in that each item in a directory can exist in one of the following states with the following given meanings:
Exclusive (E): no copies exist outside the subsystem;
Shared (S): there may be other copies of the item outside the subsystem;
Invalid (I): the item is invalid (does not really exist in the subsystem);
Reading (R): the item is requested for read;
Waiting (W) : the item is waiting to become exclusive;
Answering (A): a read request will eventually answer a read request;
Leaving (L): the item exists in the subsystem but is on its way out.

6. A computer system according to claim 5,
characterized by the possibility of transferring the following transactions on the buses to achieve various state transitions of the data items:
r, read: someone in the system wants to read the data item;
e, erase: erase all copies of the data items in question;
d, data: send a (possibly) shared data item;
i, inject: replace the last copy of a data item;
o, out: a data item is on its way out of the subsystem;
x, exclusive: the data item is the last copy of the system;
l, leave: the data item is leaving the subsystem; and,
u, up: this data item is on its way upward until it meets a directory that is not in the L state.

7. A computer system according to any one of the preceding claims, characterized by each data item memory having an out buffer to the bus above, and each directory having an out buffer to the bus above together with an out and an in buffer to the bus below, the directory given priority to input transactions from the bus above.

## Patentansprüche

1. Computersystem mit einer Architektur aus mehreren Prozessoren, welches einen verteilten physikalischen Speicher und einen gemeinsam verwendeten Adressraum hat, den man erhält, indem die Prozessoren des Systems durch Busse bzw. Busleitungen miteinander verbunden werden, einschließlich von Paaren aus Prozessoren und Speichern, welche die Datenwerte ebenso wie den Zustand von Datenobjekten speichern, **dadurch gekennzelchnet, daß** der einzige Datenspeicher des Systems aus den Objektspeichern der Prozessoren besteht, welcher Assoziativeigenschaften hat, was ermöglicht, daß Objekte in flexibler Weise dupliziert und/oder zwischen den Speichern bewegt werden, und/oder gelöscht werden unter der Steuerung eines Protokolls, und zwar derart, daß immer zumindest eine Kopie jedes Objekts in einem Objektspeicher verbleibt, wobei das System eine hierarchische Topologie mit den Prozessor-Speicherpaaren als Blätter des "Baumes" hat und Dateiverzeichnisse an den hierarchischen Baumverzweigungspunkten aufweist, welche Zustandsinformation über die Objekte in ihren Untersystemen speichern, um zu ermöglichen, daß das Protokoll seine Funktionsweise umsetzt, wobei das Protokoll bei Bedarf Kopien der Objekte bewegt bzw. verschiebt, während die Beschaffenheit der Speicher aufrecht erhalten bleibt.

2. Computersystem nach Anspruch 1, dadurch gekennzeichnet, daß das Protokoll das Ausführen von Lese- und Schreibvorgängen, etc. der Datenobjekte in Abhängigkeit von dem Zustand der Datenobjekte reguliert.

3. Computersystem nach Anspruch 1 oder 2, dadurch gekennzeichnet, daß die Speicher, und zwar sowohl die Objektspeicher als auch die Zustandsspeicher, als Assoziativspeicher eingestellt sind.

4. Computersystem nach einem der vorstehenden Ansprüche, dadurch gekennzeichnet, daß jedes Datenobjekt in einem der folgenden Zustände mit den im folgenden angegebenen Bedeutungen existieren kann:
exklusiv (E): dieses ist die einzige Kopie des Objekts,
shared (S): es kann andere Kopien des Objektes geben,
invalid (I): das Objekt ist ungültig (existiert tatsächlich nicht in dem Teilsystem),
reading (R): das Objekt ist zum Lesen angefordert,
waiting (W): das Objekt wartet darauf, in den Exklusivzustand zu kommen.

5. Computersystem nach Anspruch 4, dadurch gekennzeichnet, daß jedes Objekt in einem Dateiverzeichnis in einem der folgenden Zustände mit den im folgenden angegebenen Bedeutungen existieren kann:
exklusiv (E): es existieren keine Kopien außerhalb des Teilsystems,
shared (S): es können außerhalb des Teilsystems andere Kopien des Objektes vorhanden sein,
invalid (I): das Objekt ist ungültig (existiert tatsächlich nicht in dem Teilsystem), reading (R); das Objekt ist zum Lesen angefordert,
waiting (W): das Objekt wartet darauf, in den Exklusivzustand zu kommen,
answering (A): eine Leseanforderung folgt eventuell in Reaktion auf eine Leseanforderung,
leaving (L): das Objekt existiert in dem Teilsystem, ist jedoch dabei, dieses zu verlassen.

6. Computersystem nach Anspruch 5, gekennzeichnet durch die Möglichkeit, daß die folgenden Transaktionen auf den Busleitungen übertragen werden, um verschiedene Übergänge von Zuständen der Datenobjekte zu erreichen:
r, read: jemand in dem System möchte das Datenobjekt lesen,
e, erase: lösche alle Kopien der in Rede stehenden Datenobjekte,
d, data: sende ein (möglicherweise) gemeinsam verwendetes Datenobjekt,
i, inject: ersetze die letzte Kopie eines Datenobjektes,
o, out: ein Datenobjekt ist dabei, das Teilsystem zu verlassen,
x, exclusive: das Datenobjekt ist die letzte Kopie in dem System,
l, leave: das Datenobjekt verläßt das Teilsystem und
u, up: dieses Datenobjekt ist auf seinem Weg aufwärts, bis es auf ein Dateiverzeichnis trifft, welches nicht in dem L-Zustand ist.

7. Computersystem nach einem der vorstehenden Ansprüche, dadurch gekennzeichnet, daß jeder Datenobjektspeicher einen Ausgangspuffer zu der Busleitung darüber hat und daß jedes Dateiverzeichnis einen Ausgangspuffer zu dem Bus darüber hat, zusammen mit einem Ausgangs- und einem Eingangspuffer zu dem Bus darunter, wobei das Dateiverzeichnis die Priorität für die Eingabe von Transaktionen von der Busleitung darüber hat.

## Revendications

1. Système informatique à architecture multiprocesseur, qui possède une mémoire physique répartie et un espace d'adressage partagé obtenu en connectant les processeurs du système au moyen de bus, comportant des couples processeur-mémoire qui mémorisent tant les valeurs de données que l'état des articles de données, caractérisé en ce que la seule mémoire de données du système se compose des mémoires d'articles des processeurs, qui présente des propriétés associatives, permettant aux articles d'être dupliqués et/ou déplacés entre les mémoires d'une manière flexible, et/ou d'être effacés sous contrôle par un protocole d'une manière telle qu'au moins une copie de chaque article demeure toujours dans une mémoire d'articles, le système ayant une topologie hiérarchique avec des couples processeur-mémoire disposés comme les feuilles d'un arbre, et comprenant des répertoires aux points de branchement de l'arbre hiérarchique qui mémorisent les informations d'état concernant les articles dans son sous-système pour permettre au protocole de mettre en oeuvre sa fonctionnalité, le protocole déplaçant des copies des articles au besoin, tout en maintenant la cohérence des mémoires.

2. Système informatique selon la revendication 1, caractérisé en ce que le protocole régule les transactions pour la lecture et l'écriture, etc., des articles de données, en fonction l'état des article de données.

3. Système informatique selon la revendication 1 ou 2, caractérisé en ce que les mémoires, aussi bien les mémoires d'articles que les mémoires d'état, sont définies associatives.

4. Système informatique selon l'une quelconque des revendications précédentes , caractérisé en ce que chaque article de données peut exister dans l'un des états suivants avec les significations suivantes :
Exclusive ou Exclusif (E): ceci est l'unique copie de l'article;
Shared ou Partagé (S) : il peut exister d'autre copies de l'article;
Invalid ou Invalide (I): l'article est invalide (n'existe pas vraiment dans le sous-système);
Reading ou Lecture (R) : l'article est soumis à une demande de lecture;
Waiting ou Instance (W): l'article est en attente de devenir exclusif.

5. Système informatique selon la revendication 4, caractérisé en ce que chaque article dans un répertoire peut exister dans l'un des états suivants avec les significations suivantes :
Exclusive ou Exclusif (E): il n'existe aucune copie en dehors du sous-système;
Shared ou Partagé (S) : il peut exister d'autres copies de l'article en dehors du sous-système;
Invalid ou Invalide (I): l'article est invalide (n'existe pas vraiment dans le sous-système);
Reading ou Lecture (R) : l'article est soumis à une demande de lecture;
Waiting ou Instance (W): l'article est en attente de devenir exclusif;
Answering ou Répondant (A): une demande de lecture répondra finalement à une demande de lecture;
Leaving ou Sortie (L) : l'article existe dans le sous-système mais est sur le point de sortir.

6. Système informatique selon la revendication 5, caractérisé par la possibilité de transfert des transactions suivantes sur les bus afin de réaliser diverses transitions d'état des articles de données:
r, lecture: quelqu'un dans le système veut lire l'article de données;
e, effacer : efface toutes les copies des articles de données en question;
d, données: envoie un article de données (éventuellement) partagé;
i, injecter : remplace la dernière copie d'un article de données;
o, sortie: un article de données est sur le point de sortir du sous-système;
x, exclusif: l'article de données est la dernière copie du système;
l, quitter: l'article de données quitte le sous-système; et
u, monte: cet article de données est sur le point de monter jusqu'à ce qu'il rencontre un répertoire qui ne soit pas dans l'état L.

7. Système informatique selon l'une quelconque des revendications précédentes, caractérisé en ce que chaque mémoire d'articles de données possède un tampon de sortie vers le bus situé au-dessus, et chaque répertoire possède un tampon de sortie vers le bus situé au-dessus avec un tampon de sortie et un tampon d'entrée vers le bus situé en dessous, le répertoire donnant la priorité pour entrer les transactions à partir du bus situé au-dessus.
